# EUROPÄISCHE PATENTANMELDUNG

(11) **EP 1 726 475 A1**
(43) Veröffentlichungstag der Anmeldung: **29.11.2006**
(21) Anmeldenummer: 06112280.0
(22) Anmeldetag: 06.04.2006
(51) Int. Cl.: B60N 2/427, B60R 21/013

(54) **Vorrichtung zur Ansteuerung von wenigstens einer Fahrzeugkomponente zum Schutz von wenigstens einem Fahrzeuginsassen**

(30) Priorität: 23.05.2005 DE 102005023693
(71) Anmelder: ROBERT BOSCH GMBH, 70442 Stuttgart (DE)
(72) Erfinder: Ewerhart, Frank, 74189, Weinsberg (DE); Marchthaler, Reiner, 73333, Gingen (DE); Lich, Thomas, 71409, Schwaikheim (DE); Stabrey, Stephan, 70469, Stuttgart (DE); Mayer, Georg, 71254, Ditzingen (DE)

(57) **Zusammenfassung**

Es wird eine Vorrichtung zur Ansteuerung von wenigstens einer Fahrzeugkomponente (12, 13, 16) zum Schutz von wenigstens einem Fahrzeuginsassen in Abhängigkeit eines eine Gefährdung des Fahrzeugs kennzeichnenden Signals vorgeschlagen, wobei die wenigstens eine Fahrzeugkomponente (12, 13, 16) derart konfiguriert ist, dass die wenigstens eine Fahrzeugkomponente (12, 13, 16) in Folge der Ansteuerung einer Lateralbewegung des wenigstens eines Fahrzeuginsassen entgegenwirkt.

## Beschreibung

### Stand der Technik

Die Erfindung geht aus von einer Vorrichtung zur Ansteuerung von wenigstens einer Fahrzeugkomponente zum Schutz von wenigstens einem Fahrzeuginsassen nach der Gattung des unabhängigen Patentanspruchs.

Aus DE 102 50 732 B3 ist bereits eine Steuervorrichtung zur Ansteuerung von Insassen und/oder Personenschutzmitteln bekannt, wobei in Abhängigkeit von fahrdynamischen Daten ein elektromotorischer Gurtstraffer angesteuert wird.

### Vorteile der Erfindung

Die erfindungsgemäße Vorrichtung zur Ansteuerung von wenigstens einer Fahrzeugkomponente zum Schutz von wenigstens einem Fahrzeuginsassen mit den Merkmalen des unabhängigen Patentanspruchs hat demgegenüber den Vorteil, dass durch die Ansteuerung der wenigstens einen Fahrzeugkomponente die Lateralbewegung des wenigstens einen Fahrzeugsinsassen entgegengewirkt wird, so dass der Fahrzeuginsasse besser in Bezug auf Airbags positioniert wird und dadurch eine bessere Wirkung der Airbags bzw. ein geringeres Risiko der Verletzung des Insassen durch die Airbagzündung erreicht wird. Insbesondere werden damit Kopfverletzung durch den Curtainairbag, wenn der Fahrzeuginsasse mit dem Kopf zu nah am Fenster ist, oder ein Abrutschen am Frontairbag bei vorhergehender Seitwärtsbewegung des Insassen vermieden. Darüber hinaus verringert sich die Gefahr, dass sich der Fahrzeuginsasse bei einem gegenüber liegenden Seitencrash oder beim Überrollvorgang seitlich aus dem 3-Punkt-Gurt in Richtung Fahrzeugmitte bewegt. Damit wird eine Verringerung der Verletzungsgefahr beim Kontakt zum neben sitzenden Fahrzeuginsassen und eine Verbesserung der Rückhaltewirkung des Gurtes bei nachfolgenden Crashes erreicht. Darüber hinaus wird der Fahrzeuginsasse bei Schleudermanövern besser fixiert, so dass eine geringere Verletzungsgefahr durch einen Kontakt mit der Seitenscheibe bzw. Türe vorliegt. Außerdem ist die erfmdungsgemäße Vorrichtung derart konfiguriert, dass die anzusteuernden Fahrzeugkomponenten voll reversibel sind, so dass sie frühzeitig vor einer Kollision und ohne große Misuse-Anforderungen aktivierbar sind. D. h. eine Fehlauslösung ist hier nicht so dramatisch und kann einfacher hingenommen werden als bei pyrotechnisch zündbaren Personenschutzmitteln wie einem Airbag.

Durch die in den abhängigen Ansprüchen aufgeführten Maßnahmen und Weiterbildungen sind vorteilhafte Verbesserungen der im unabhängigen Patentanspruch angegebenen Vorrichtung zur Ansteuerung von wenigstens einer Fahrzeugkomponente zum Schutz von wenigstens einem Fahrzeuginsassen möglich.

Besonders vorteilhaft ist, dass die Vorrichtung das Signal, das die Gefährdung anzeigt, in Abhängigkeit von Fahrdynamikdaten und/oder Umfelddaten erzeugt. Zu den Fahrdynamikdaten gehören die Beschleunigungen in allen Raumrichtungen, insbesondere die Fahrzeugquerbeschleunigung. Aber auch der Schwimmwinkel oder die Drehbewegung um eine Fahrzeughochachse oder eine Fahrzeuglängsachse oder die Fahrzeugquerachse werden hier berücksichtigt. Ebenso Verzögerungen in allen Raumrichtungen. Darüber hinaus werden jedoch auch vorzugsweise Umfelddaten berücksichtigt. Zur Erzeugung dieser Umfelddaten ist eine Umfeldsensorik notwendig. Eine Umfeldsensorik weist Sensortypen wie Radarsensoren, Ultraschallsensoren, Lidar und/oder Videosensoren auf. Damit lässt sich in einer Prozessoreinheit auswerten, ob ein Unfall mit einem sich nähernden Objekt vermeidbar ist oder nicht. Zu den Sensoren, mit denen die Fahrdynamikdaten erfassbar sind, gehören Beschleunigungssensoren, Drehraten- und/oder Drehwinkelsensoren und auch Sensoren zur Erfassung der Eigengeschwindigkeit. Diese Sensoren, insbesondere die Beschleunigungssensoren, können innerhalb eines Airbagsteuergeräts oder eines Steuergeräts für die Fahrdynamikregelung oder auch außerhalb der Steuergeräte in einer separaten Sensorbox, die beispielsweise auf dem Fahrzeugtunnel platziert ist, angeordnet sein.

Weiterhin ist es vorteilhaft, dass die wenigstens eine Fahrzeugkomponente eine Sitzkomponente, vorzugsweise eine Seitenwange ist. Vorzugsweise können natürlich beide Seitenwangen eines Fahrzeugsitzes ansteuerbar sein. Die Seitenwangen sind besonders geeignet, um eine Lateralbewegung eines Fahrzeuginsassen zu vermeiden und dieser entgegenzuwirken. Die Seitenwangen können reversibel elektromotorisch und/oder pneumatisch bewegt werden. Aber auch jeder andere reversibel ausführbare Antrieb ist hier möglich. Zusätzlich oder anstatt der Seitenwangen können auch Sitzkomponenten ansteuerbar sein, die der Lateralbewegung des Oberkörpers entgegenwirken und an der Sitzlehne angeordnet sind. Diese Sitzkomponenten sind insbesondere derart konfiguriert, dass sie Bereiche des Oberkörpers umfassen, um damit einen noch besseren Halt dem Fahrzeuginsassen zu verschaffen.

Es ist insbesondere vorteilhaft, dass die erfindungsgemäße Vorrichtung derart mit einem Gurtstraffer koppelbar ist, dass die Vorrichtung den reversiblen Gurtstraffer in Einklang mit der wenigstens einen Fahrzeugkomponente ansteuern kann. Damit ist eine koordinierte Auslösung der reversibel ausgeführten Personenschutzmitteln möglich. Diese können insbesondere gleichzeitig angezogen werden.

In einer Weiterbildung ist es möglich, dass der Fahrzeugsitz oder das Sitzkissen verkippbar sind, so dass diese Fahrzeugkomponenten bei einem Seitenaufprall in Stoßrichtung gekippt werden.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Vorrichtung
- Figur 2: einen Fahrzeugsitz und
- Figur 3: ein Flussdiagramm.

### Beschreibung

Zunehmend werden bei Sicherheitssystemen in Kraftfahrzeugen aktive und passive Sicherheiten miteinander verknüpft. Bekannt ist beispielsweise das PRESAFE System der Firma DaimlerChrysler AG, das Informationen aus einem Fahrdynamikregelsystem (ESP) sowie des Bremsassistenten zur Ansteuerung von reversiblen Rückhaltemitteln (Gurtstraffer) zum Schließen der Seitenfenster und des Schiebedachs sowie zur Aufrichtung der Sitzlehne verwendet.

Erfindungsgemäß wird nunmehr vorgeschlagen, eine Fahrzeugkomponente derart anzusteuern, dass sie der lateralen Bewegung eines Fahrzeuginsassen entgegenwirkt und diese zum großen Teil verhindert. Dabei soll insbesondere die Seitenwangenverstellung angesteuert werden, um den Seitenhalt zu erhöhen. Die erfindungsgemäße Vorrichtung ist insbesondere für einen Seitenaufprall, einen Überrollcrash aber auch bei Frontkollisionen, denen ein Fahrmanöver mit hoher Querbeschleunigung vorausgeht, geeignet. Aufgrund von Fahrdynamikdaten wie der Quergeschwindigkeit, des Schwimmwinkels oder des Wankwinkels oder aufgrund von Informationen von einer Umfeldsensorik wie seitlich Objekt erkennenden Sensoren, z. B. Ultraschall, Radar, Lida oder Videosensoren kann eine potentielle Seiten- oder Überrollcrashsituation vorausschauend erkannt werden. Zu einem geeigneten Zeitpunkt vor dem Unfall löst ein Algorithmus eine reversible, z. B elektromotorisch oder pneumatisch konfigurierte Verstellung der Seitenwangen eines Aktivsitzes aus. Damit wird eine Lateralbewegung der Insassen aufgrund einer Querbeschleunigung verringert. Vorteilhaft ist hier die Kombination mit einem reversiblen Gurtstraffer, der den Insassen stärker an den Sitz koppelt und so die Wirkung des Sitzes verstärkt.

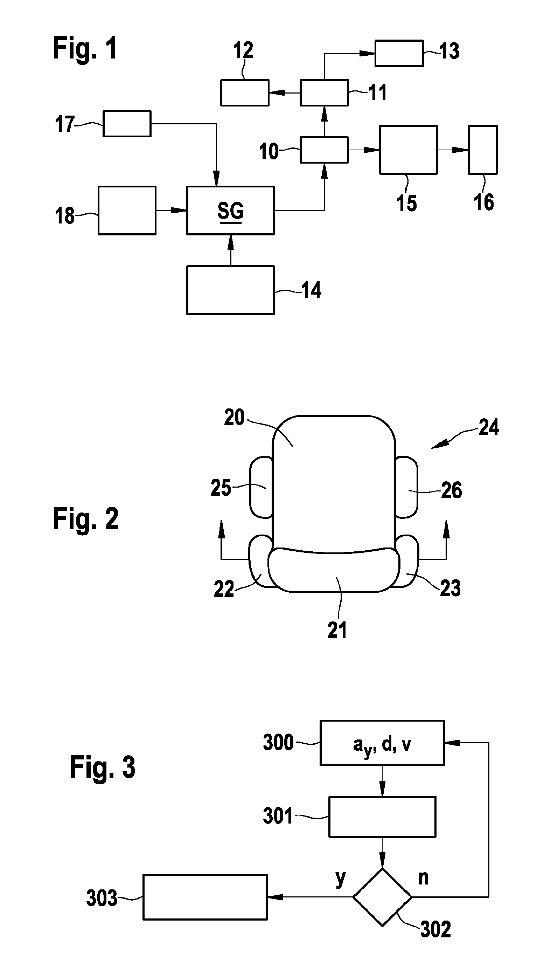

Figur 1 zeigt in einem Blockschaltbild die erfindungsgemäße Vorrichtung. Ein Steuergerät SG zur Ansteuerung der Seitenwangen erhält Daten von kinematischen Sensoren 14 wie Beschleunigungssensoren, Drehwinkelsensoren oder Drehratensensoren und von Insassenpositionssensoren 17 wie Video- oder Sitzkraftsensoren und von einer Umfeldsensorik 18. Die Umfeldsensorik 18 kann wie oben dargelegt Radar-, Video-, Ultraschall- oder Lidarsensoren aufweisen. In Abhängigkeit von diesen Daten steuert das Steuergerät SG eine Ansteuerung 10 an, die mit Motoren 11 und 15 verbunden ist, wobei die Motoren 11 die Seitenwangen 12 und 13 ansteuern und der Motor 15 den reversibel ausgeführten Gurtstraffer 16 ansteuert. Die Ansteuerung 10 kann jedoch auch andere Fahrzeugkomponenten ansteuern, die geeignet sind, um eine Seitwärtsbewegung des Fahrzeuginsassen zu verhindern oder wenigstens abzumildern. Teile der kinematischen Sensoren 14 können sich bereits im Steuergerät SG befmden, wobei das Steuergerät SG auch als Airbagsteuergerät ausgeführt sein kann. Es ist jedoch möglich, dass das Steuergerät SG auch mit einem Airbagsteuergerät und/oder mit einem Steuergerät für Fahrdynamik und/oder mit einem Bremsassistenten in Verbindung steht, um deren Daten auszunutzen und auch diesen Steuergeräten die entsprechenden Daten, die diese benötigen, zur Verfügung zu stellen. Die Motoren 11 bzw. 15 können mehrere Motoren aufweisen und können entweder elektromotorisch oder pneumatisch oder als Ultraschallmotor ausgeführt sein. Der Elektromotor kann insbesondere als Gleichstrommotor ausgeführt sein.

Figur 2 zeigt einen Sitz 24 mit einer Sitzlehne 20, einem Sitzkissen 21 und den Seitenwangen 22 und 23 die in vertikaler Höhe verschiebbar sind, um einen Fahrzeuginsassen, der auf Sitz 24 sitzt bezüglich einer Seitwärtsbewegung ein Hindernis in den Weg zu legen, um diese Seitwärtsbewegung zu verhindern oder zumindest abzumildern. Sitzkomponenten, die erfindungsgemäß ansteuerbar sind, können auch an der Sitzlehne 20 angeordnet sein, wie es die Komponenten 25 und 26 sind. Diese Komponenten 25 und 26 können dem Oberkörper einer auf dem Fahrzeugsitz befmdlichen Person den Halt in lateraler Richtung geben. Dabei können die Komponenten 25 und 26 auf Bereiche des Oberkörpers umfassen. Es ist weiterhin zusätzlich oder anstatt möglich, dass der Sitz 24 verkippbar ist, so dass bei einem Seitenaufprall der Fahrzeugsitz 24 in Richtung des Seitenaufprall kippt. Dies kann auch nur für das Sitzkissen vorgesehen sein.

Figur 3 zeigt in einem Flussdiagramm den Ablauf, den die erfindungsgemäße Vorrichtung durchläuft. In Verfahrensschritt 300 werden die Sensordaten beispielsweise die Fahrzeugquerbeschleunigung, der Abstand zu Objekten, die Eigengeschwindigkeit, Drehwinkel, Drehrate usw. im Steuergerät SG mittels eines Prozessors und entsprechender Speichermittel ausgewertet, wobei die Speichermittel als RAM ausgeführt sind. Diese Bewertung wird in Verfahrensschritt 301 durchgeführt. Anhand der Bewertung erkennt das Steuergerät SG, ob eine Seitwärtsbewegung des Fahrzeuginsassen vorliegt oder zumindest kurz bevorsteht. Ist die Seitwärtsbewegung so, dass dieser entgegengewirkt werden soll, um mögliche Verletzungen zu vermeiden, dann wird in Verfahrensschritt 302 entschieden, dass in Verfahrensschritt 303 die Seitenwangen 12 und 13 angesteuert werden. Ist das nicht der Fall, dann wird zu Verfahrensschritt 300 zurückgesprungen, um weiterhin die Kenngrößen aufzunehmen. Die Auswertung der Kenngrößen kann adaptiv erfolgen, also beispielsweise durch einen variablen Schwellwert, der sich auf die zu bewertende Größe selbst einstellt. Dabei können die bewerteten Größen integriert werden oder abgeleitet werden oder auch so verwendet werden. Auch eine entsprechende Mittelung oder andere Glättungsverfahren sind hier möglich.

## Patentansprüche

1. Vorrichtung zur Steuerung von wenigstens einer Fahrzeugkomponente (12, 13, 16) zum Schutz von wenigstens von einem Fahrzeuginsassen in Abhängigkeit eines eine Gefährdung des Fahrzeugs kennzeichnenden Signals, **dadurch gekennzeichnet, dass** die wenigstens eine Fahrzeugkomponente (12, 13, 16, 24, 25) derart konfiguriert ist, dass die wenigstens eine Fahrzeugkomponente (12, 13, 16, 24, 25) in Folge der Ansteuerung einer Lateralbewegung des Fahrzeuginsassen entgegenwirkt.

2. Vorrichtung nach Anspruch 1, **dadurch gekennzeichnet, dass** die Vorrichtung das Signal in Abhängigkeit von Fahrdynamikdaten und/oder Umfelddaten erzeugt.

3. Vorrichtung nach Anspruch 1 oder 2, **dadurch gekennzeichnet, dass** die wenigstens eine Fahrzeugkomponente (12, 13, 16) eine Sitzkomponente ist.

4. Vorrichtung nach Anspruch 3, **dadurch gekennzeichnet, dass** die Sitzkomponente eine Seitenwange ist.

5. Vorrichtung nach Anspruch 3, **dadurch gekennzeichnet, dass** die Sitzkomponente an der Sitzlehne (20) derart angeordnet ist, dass die Sitzkomponente der Lateralbewegung des Oberkörpers des Fahrzeuginsassen entgegenwirkt.

6. Vorrichtung nach Anspruch 3, **dadurch gekennzeichnet, dass** die Vorrichtung die wenigstens eine Sitzkomponente (22, 23) elektronisch oder pneumatisch bewegt.

7. Vorrichtung nach einem der vorhergehenden Ansprüche, **dadurch gekennzeichnet, dass** die Vorrichtung mit wenigstens einem reversiblen Gurtstraffer derart koppelbar ist, dass die Vorrichtung den wenigstens einen reversiblen Gurtstraffer mit der wenigstens einen Fahrzeugkomponente ansteuert.

8. Vorrichtung nach einem der vorhergehenden Ansprüche, **dadurch gekennzeichnet, dass** die Fahrzeugkomponente derart verkippbar ist, dass die Fahrzeugkomponente in Richtung der Lateralbewegung gekippt wird.

9. Vorrichtung nach Anspruch 8, **dadurch gekennzeichnet, dass** die Fahrzeugkomponente der Fahrzeugsitz (24) oder das Sitzkissen (21) ist.
